# EUROPEAN PATENT APPLICATION

(11) **EP 3 200 563 A1**
(43) Date of publication of application: **02.08.2017**
(21) Application number: 15843267.4
(22) Date of filing: 30.10.2015
(51) Int. Cl.: H05B 37/02

(54) **BUS BAR CURRENT CONTROL CIRCUIT, CONSTANT-CURRENT DRIVING CONTROLLER AND LED LIGHT SOURCE**

(30) Priority: 25.09.2014 CN 201410497139
(71) Applicant: DELIGHT INNOVATIVE TECHNOLOGIES LIMITED, Hong Kong (CN)
(72) Inventor: YAU, Kinhing, Hong Kong (CN)
(74) Representative: Grünecker Patent- und Rechtsanwälte PartG mbB
(86) International application number: PCT/CN2015/093425
(87) International publication number: WO 2016/045644

(57) **Abstract**

The present invention relates to a busbar current control circuit, a constant current drive controller and an LED light source, wherein the busbar current control circuit comprises a branch resistor, a branch capacitor and a branch current source, the branch resistor and the branch capacitor are connected in parallel to form a branch, one end of the branch is connected a position between the busbar resistor and the load, and the other end is connect to the branch current source; the branch current source outputs to the branch a current of adjustable magnitude, the sum of the voltage on the busbar resistor and the voltage on the branch resistor remains constant. Wherein the branch resistor occupies a portion of the voltage of the busbar resistor so that the magnitude of the current output by the busbar changes continuously, that is, when the current flowing into the branch increases, the voltage occupied by the branch resistor increases and the voltage on the busbar resistor decreases, so as to reduce the current on the busbar. Since the branch current is smoothly adjusted by the branch current source, the regulation of the output current on the busbar is also smooth. This avoids the use of the SPWM wave or the dimming switch circuit in the prior art, and the stroboscopic phenomenon due to the discontinuity of the driving current.

## Description

### Technology Field

The present invention relates to an LED driving technique, and more particularly to a busbar current control circuit, a constant current drive controller and an LED light source.

### Background Technique

With the invention and application of new semiconductor devices, the luminous efficiency and luminous intensity of LED (Light Emitting Diode) are increasingly improved. LEDs are gradually becoming a new generation of light source. Currently, the LEDs are usually driven by constant current. Constant current drive circuits are achieved through dedicated LED driver chips. When adjusting the brightness of an LED, a serial digital signal and PWM (Pulse Width Modulation) signal would be added to the LED constant current driver chip. This dimming control method uses PWM wave to adjust the pulse duty cycle of the power switch transistor in the high frequency inverter to realize the adjustment of the LED output power.

The principle is that, if the power switch transistor is operating in the ZVS (Zero Voltage Switch) state when the power switch transistor is ON, the power switch transistor will achieve a ZCS (Zero Current Switch) operating state by means of an absorption capacitor at the instant of being turned off, so that the ZVS operating state can be achieved while EMI (Electromagnetic Interference) and the electrical stress of the power switch transistor can be significantly reduced. However, if the pulse duty cycle of PWM wave is too small to keep the continuousness of the drive current, the power switch transistor will lose the ZVS operating conditions, resulting in the stroboscopic situation of LED lights. In addition, the generation of PWM waves requires an external waveform generator so as to increase the complexity and cost of the circuit.

### Summary of the invention

With respect to the disadvantage of the stroboscopic situation of the LED constant current drive circuit in the prior art, the present invention provides a busbar current control circuit which can continuously adjust the magnitude of busbar current inputted to the load by connecting an active branch to the busbar to occupy the voltage drop on the busbar resistor, a constant current drive controller using the circuit, and an LED light source using the constant current drive controller.

The technical solution of the invention is as follows:
A busbar current control circuit is characterized in that it comprises a branch resistor, a branch capacitor and a branch current source, wherein the branch resistor and the branch capacitor are connected in parallel to form a branch; one end of the branch is connected to a position between the busbar resistor and the load, and the other end is connected to the branch current source; and the branch current source outputs a current of adjustable magnitude to the branch.

The branch capacitor is a capacitor of 0.01 to 0.22 µF, and the branch resistor is a resistor of 0.5 to 2 KΩ.

The branch current source is a constant current source.

The constant current source comprises a first triode, a second triode, an equivalent voltage input source and a branch power source; wherein a fixed pin of the variable resistor is connected to the branch power source and the other fixed pin is connected to the base of the first triode, the moving pin of the variable resistor is connected to the base of the second triode; the base of the first triode is connected to a position between the base of the second triode and the moving pin, and the collector of the first triode is connected to its own base and its emitter is grounded; the collector of the second triode is used as the output of the constant current source and its emitter is grounded.

The first triode may be replaced with a first diode, wherein the positive electrode of the first diode is simultaneously connected to the other fixed pin, the base of the second triode and the moving pin, the negative electrode of the first diode is grounded, and the equivalent voltage input source is the variable resistor or other variable voltage input circuit.

It further comprises a first resistor and a second resistor, the first resistor being connected between the base of the second triode and the moving pin, one end of the second resistor being connected between the first resistor and the base of the second triode, and the other end being connected to the other fixed pin.

The emitter of the second triode is grounded through a resistor.

A constant current drive controller using the busbar current control circuit, is characterized in that it further comprises a constant current control chip, a busbar resistor, a second diode and a energy storage inductor, the constant current control chip comprises a first voltage measurement pin, a second voltage measurement pin and a switch pin; the two ends of the busbar resistor are respectively connected to a power supply and the positive terminals of the load, the negative terminal of the load is connected to one end of the energy storage inductor, the other end of the energy storage inductor is connected to the positive terminal of the second diode and the switch pin, the first voltage measurement pin is connect to a position between the busbar resistor and the power supply; one end of the branch formed by the branch resistor and the branch capacitor connected in parallel in the busbar current control circuit is connected to a position between the busbar resistor and the load, the other end of the branch is connected to the second voltage measurement pin; the sum of the voltage on the busbar resistor and voltage on branch resistor remains constant.

The first voltage measurement pin and the second voltage measurement pin are used for measuring a voltage between the busbar resistor and the branch resistor.

The constant current control chip is a switching constant current driving chip.

The first voltage measurement pin is a power input terminal of the switching constant current driving chip.

The constant current control chip, the busbar resistor, the second diode and the energy storage inductor are hybridly packaged.

An LED light source using the constant current drive controller is characterized in that the load connected to the constant current drive controller is an LED load.

The technical effect of the invention is as follows:
A busbar current control circuit of the invention comprises a branch resistor, a branch capacitor and a branch current source, wherein the branch resistor and the branch capacitor are connected in parallel to form a branch, one end of the branch is connected a position between the busbar resistor and the load, and the other end is connect to the branch current source; the branch current source outputs to the branch a current of adjustable magnitude, the sum of the voltage on the busbar resistor and the voltage on the branch resistor remains constant. Wherein the branch resistor occupies a portion of the voltage of the busbar resistor so that the magnitude of the current output by the busbar changes continuously, that is, when the current flowing into the branch increases, the voltage occupied by the branch resistor increases and the voltage on the busbar resistor decreases, so as to reduce the current on the busbar. Since the branch current is smoothly adjusted by the branch current source, the regulation of the output current on the busbar is also smooth. This avoids the use of the SPWM wave or the dimming switch circuit in the prior art, and the stroboscopic phenomenon due to the discontinuity of the driving current.

As the branch resistor is connected with a larger branch capacitor in parallel, regardless of how the voltage on the busbar resistor changes, the voltage on the branch resistor tends to be stable and will not affect the characteristics of the busbar circuit itself.

The busbar current control circuit according to the present invention can be used as long as it is connect to the busbar without the need of complicated external circuit and waveform generating circuit, which simplifies the circuit design, reduces the use cost and is convenient and reliable. The present invention can be applied not only to the brightness modulation of the LED light source but also to other fields, such as the field of motor, where the constant current drive is required.

The branch current source of the present invention is a constant current source. The constant current source comprises a first triode, a second triode, a variable resistor and a branch power source. Wherein a fixed pin of the variable resistor is connected to the branch power source and the other fixed pin is connected to the base of the first triode, the moving pin of the variable resistor is connected to the base of the second triode; the collector of the second triode is used as the output of the constant current source and its emitter is grounded. The output current of the branch current source is adjusted by continuously changing the equivalent voltage input source such as a variable resistor (0-10V output for variable voltage input control of the lamp) to output a continuously varying branch current. Since the first resistor and the second resistor are connected to the constant current source in the present invention so that the voltage between the base of the second triode and the ground point is attenuated in proportion to the output voltage of the variable resistor, it is helpful to the branch current fine-tuning, so that the LED operating current can be accurately set to extend the life of the LED.

A constant current drive controller of the present invention connects the busbar current control circuit between the busbar resistor and the load for adjusting an input load busbar current. This allows the combination and hybrid packaging of the busbar current control circuit and a dedicated constant current control chip, which is conducive to the stability of the components in use.

### Description of the drawings

FIG. 1 is a schematic structural view of an LED constant current drive controller according to the present invention.
FIG. 2 is a schematic view showing an adjustment of the busbar resistor voltage V_{Rs} of the constant current chip of the present invention
FIG. 3 is a schematic view showing the adjustment of the occupied busbar resistor voltage V_{Rs}' after connecting the branch of the present invention
FIG. 4 is a schematic structural view of a preferred embodiment of a branch constant current source of the present invention

### Description of the preferred embodiments

The present invention will be described with reference to the accompanying drawings.

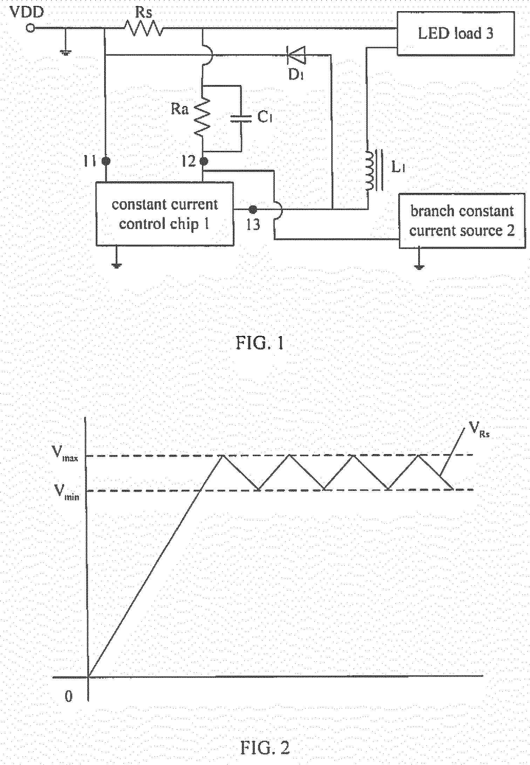

As shown in FIG. 1, the LED constant current drive controller of the present invention mainly includes a constant current control chip 1, a busbar current control circuit, an LED load 3, a busbar resistor Rₛ, a diode D₁, an energy storage inductor L₁ and a power supply VDD. As an example, the constant current control chip 1 is the switching constant current driver chip 6808. The first voltage measurement pin 11 (the power input terminal VIN), the second voltage measurement pin 12(voltage sampling terminal CS) and the switch pin 13(switch terminal DIM) of the constant current control chip 1 is mainly used. The output of the power supply VDD is connected to one end of the busbar resistor Rₛ. The other end of the busbar resistor Rₛ is connected to the positive terminal of the LED load 3. The negative terminal of the LED load 3 is connected to one end of the energy storage capacitor L₁. The other end of the energy storage capacitor L₁ is connected to the positive terminal of the diode D₁ and the switching pin 13 of the constant current control chip 1. The negative terminal of the diode D₁ are connected to a position between the busbar resistor Rₛ and the power supply VDD.

Between the busbar resistor and the LED load 3, the busbar current control circuit is connected. The busbar current control circuit includes a branch formed in parallel by a branch resistor Rₐ and a branch capacitor C₁, and a branch constant current source 2 for supplying power to the branch. The one end of the branch is connected to a position between the busbar resistor Rₛ and the LED load 3, and the other end is connected to the branch constant current source 2. The branch constant current source 2 supplies power to the branch, inputs the branch current I_{Ra} to the branch and generates the branch resistor voltage V_{Ra} on the branch resistor Rₐ. The first voltage measurement pin 11 is connected to one end of the busbar resistor Rₛ which is close to the power supply VDD. The second voltage measurement pin 12 is connected to the end of the branch which is far away from the busbar. The first voltage measurement pin 11 and the second voltage measurement pin 12 are used to measure the sum of the busbar resistor voltage V_{Rs}' and the branch resistor voltage V_{Ra} after occupied. The branch capacitor C₁ in the present embodiment is preferably a capacitor of 0.01 to 0.22µF, more preferably 0.1 µF, even 0.001 µF, which may be a general high reliability ceramic capacitor. The branch resistor Ra is a resistor of 0.5 to 2 KΩ, preferably 1 KΩ.

As shown in FIG. 2, when the branch constant current source 2 of the busbar current control circuit does not output the branch current I_{Ra} to the branch where the branch resistor Rₐ is located and the power supply VDD is newly connected to the circuit, the first voltage measurement pin 11 and the second voltage measurement pin 12 detect that the busbar resistor voltage V_{Rs} is below the minimum rated voltage Vₘᵢₙ. Then the switch pin 13 is turned on. The busbar resistor voltage V_{Rs}, the LED load 3, the energy storage inductor L₁ and the constant current control chip 1 form a loop so that the busbar resistor voltage V_{Rs} gradually rises, and the energy storage capacitor L₁ is recharged. When the first voltage measurement pin 11 and the second voltage measurement pin 12 of the constant current control chip 1 detect that the busbar resistor voltage V_{Rs} is higher than the maximum rated voltage Vₘₐₓ, the switch pin 13 is turned off. Then the energy storage capacitor L₁ is discharged. The diode D₁ is ON. The busbar resistor voltage V_{Rs}, the LED load 3, the energy storage inductor L₁ and the diode D₁ form a loop so that the busbar resistor voltage V_{Rs} gradually decreased. When the first voltage measurement pin 11 and the second voltage measurement pin 12 of the constant current control chip 1 detect that the busbar resistor voltage V_{Rs} drops to the minimum rated voltage Vₘᵢₙ, the switch pin 13 is turned on and the above steps are repeated. Through the control of the constant current control chip 1, the positive terminal current I_{Rs} of the input LED load 3 tend to be constant, so as to achieve the purpose of LED constant current drive.

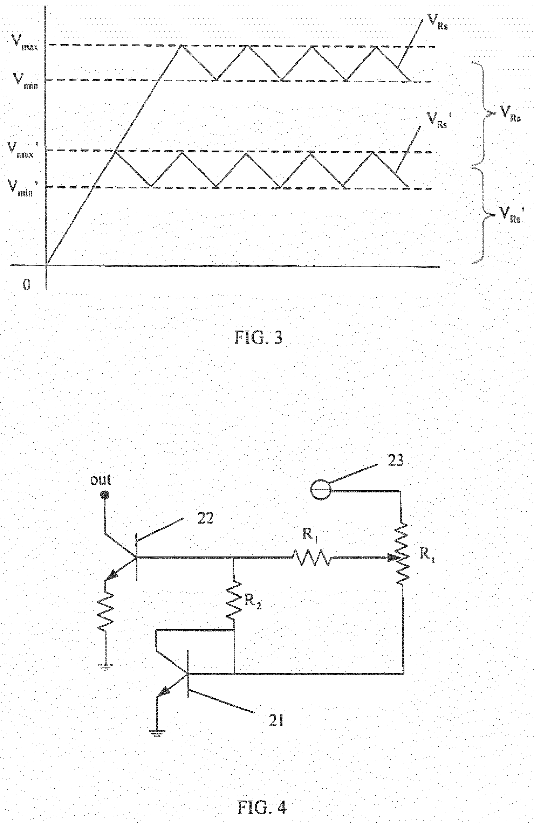

As shown in FIG. 3, when the branch constant current source 2 of the busbar current control circuit outputs branch current I_{Ra} to the branch where the branch resistor Rₐ is located, the branch resistor Rₐ occupies the busbar resistor voltage V_{Rs} over the busbar resistor Rₛ. If the occupied busbar resistor voltage V_{Rs}¹ + the branch resistor voltage V_{Ra} = the busbar resistor voltage V_{Rs}, the measured value between the first voltage measurement pin 11 and the second voltage measurement pin 12 of the constant current control chip 1 remains constant. When the magnitude of the branch current I_{Ra} output from the branch constant current source 2 varies continuously, accordingly, the branch resistor voltage V_{Ra} also varies linearly. As the branch current I_{Ra} becomes larger and the branch resistor voltage V_{Ra} becomes larger, the occupied busbar resistor voltage V_{Rs}¹ becomes smaller, so that the busbar current I_{Rs} input to the positive terminal of the LED load 3 becomes smaller and the brightness of the LED becomes lower. On the contrary, when the branch current I_{Ra} becomes smaller, so that the busbar current I_{Rs} input to the positive terminal of the LED load 3 become larger, the brightness of the LED will become higher. Accordingly, the continuous, smooth adjustment of the brightness of the LED can be achieved by means of a simple circuit. Therefore, the adjusted maximum rated voltage Vₘₐₓ will be reduced to Vₘₐₓ', the minimum rated voltage Vₘᵢₙ will be reduced to Vₘᵢₙ',

As shown in FIG. 4, the branch constant current source 2 of the present invention is preferably a constant current source composed of a first triode 21, a second triode 22, a first resistor R₁, a second resistor R₂, a variable resistor Rₜ and a branch power supply 23. Wherein a fixed pin of the variable resistor R₁ is connected to the branch power source 23, and the other fixed pin is connected to the base of the first triode 21, the moving pin is connected to one end of the first resistor R₁; the two ends of the second resistor R₂ is respectively connected to the other end of the first resistor R₁ and the base of the first triode 21, and the other end of the first resistor R1 is connected to the base of the second triode 22; the collector of the first triode 21 is connected to its own base and its emitter is grounded; the collector of the second triode 22 is used as the output of the constant current source and its emitter is grounded through a resistor, which is preferably a resistor of 20KΩ. The first resistor R1 in the present embodiment is a resistor of 300 to 600 KΩ, preferably a resistor of 400 KΩ. The second resistor R2 is a resistor of 70 to 150 KΩ, preferably a resistor of 100 KΩ.

The first triode 21 may be replaced by a diode. The positive terminal of the diode is connected to the other fixed pin of the variable resistor R₁. The positive terminal of the diode is also connected to a position between the base of the second triode 22 and the variable resistor Rₜ. The negative terminal of the diode is grounded.

It should be noted that the specific embodiments described above may enable those skilled in the art to more fully understand the invention, but not in any way limit the invention. Accordingly, although the present specification has been described in detail with reference to the accompanying drawings and examples, it will be understood by those skilled in the art that modifications may be made to the present invention or equivalents may be substituted for the purposes of the present invention. In summary, all technical solutions and modifications that do not depart from the spirit and scope of the present invention are intended to be encompassed by the scope of the invention as claimed.

## Claims

1. A busbar current control circuit, **characterized in that** it comprises a branch resistor, a branch capacitor and a branch current source, wherein the branch resistor and the branch capacitor are connected in parallel to form a branch; one end of the branch is connected to a position between the busbar resistor and the load, and the other end is connected to the branch current source; and the branch current source outputs a current of adjustable magnitude to the branch.

2. A busbar current control circuit according to claim 1, wherein the branch capacitor is a capacitor of 0.01 to 0.22 µF, and the branch resistor is a resistor of 0.5 to 2 KΩ. The branch current source is a constant current source.

3. A busbar current control circuit according to claim 1 or 2, wherein the constant current source comprises a first triode, a second triode, an equivalent voltage input source and a branch power source; wherein a fixed pin of the variable resistor is connected to the branch power source and the other fixed pin is connected to the base of the first triode, the moving pin of the variable resistor is connected to the base of the second triode; the base of the first triode is connected to a position between the base of the second triode and the moving pin, and the collector of the first triode is connected to its own base and its emitter is grounded; the collector of the second triode is used as the output of the constant current source and its emitter is grounded.

4. A busbar current control circuit according to claim 3, wherein the first triode may be replaced with a first diode, wherein the positive electrode of the first diode is simultaneously connected to the other fixed pin, the base of the second triode and the moving pin, the negative electrode of the first diode is grounded, and the equivalent voltage input source is the variable resistor or other variable voltage input circuit.

5. A busbar current control circuit according to claim 4, wherein it further comprises a first resistor and a second resistor, the first resistor being connected between the base of the second triode and the moving pin, one end of the second resistor being connected between the first resistor and the base of the second triode, and the other end being connected to the other fixed pin; the emitter of the second triode is grounded through a resistor.

6. A constant current drive controller using the busbar current control circuit according to any of claim 1 to 5, wherein it further comprises a constant current control chip, a busbar resistor, a second diode and a energy storage inductor, the constant current control chip comprises a first voltage measurement pin, a second voltage measurement pin and a switch pin; the two ends of the busbar resistor are respectively connected to a power supply and the positive terminals of the load, the negative terminal of the load is connected to one end of the energy storage inductor, the other end of the energy storage inductor is connected to the positive terminal of the second diode and the switch pin, the first voltage measurement pin is connect to a position between the busbar resistor and the power supply; one end of the branch formed by the branch resistor and the branch capacitor connected in parallel in the busbar current control circuit is connected to a position between the busbar resistor and the load, the other end of the branch is connected to the second voltage measurement pin; the sum of the voltage on the busbar resistor and voltage on branch resistor remains constant.

7. A constant current drive controller according to claim 6, wherein the first voltage measurement pin and the second voltage measurement pin are used for measuring a voltage between the busbar resistor and the branch resistor.

8. A constant current drive controller according to claim 6 or 7, wherein the constant current control chip is a switching constant current driving chip; the first voltage measurement pin is a power input terminal of the switching constant current driving chip.

9. A constant current drive controller according to claim 6 or 7 or 8, wherein the constant current control chip, the busbar resistor, the second diode and the energy storage inductor are hybridly packaged.

10. An LED light source using the constant current drive controller according to any of claim 6 to 9, wherein the load connected to the constant current drive controller is an LED load.
